(19) Europäisches Patentamt
European Patent Office
Office européen des brevets

(11) **EP 4 787 837 A1**

(12) **EUROPEAN PATENT APPLICATION**
published in accordance with Art. 153(4) EPC

(43) Date of publication:
**05.08.2026 Bulletin 2026/32**

(21) Application number: **24872417.1**

(22) Date of filing: **26.09.2024**

(51) International Patent Classification (IPC):
**H04N 19/11** (2014.01)   **H04N 19/14** (2014.01)
**H04N 19/157** (2014.01)   **H04N 19/176** (2014.01)
**H04N 19/186** (2014.01)

(52) Cooperative Patent Classification (CPC):
**H04N 19/11; H04N 19/14; H04N 19/157;
H04N 19/176; H04N 19/186**

(86) International application number:
**PCT/JP2024/034471**

(87) International publication number:
**WO 2025/070632 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023 JP 2023170492**

(71) Applicant: **Nippon Hoso Kyokai
Tokyo 150-8001 (JP)**

(72) Inventors:
• **NEMOTO, Shimpei
Tokyo 157-8510 (JP)**
• **IWAMURA, Shunsuke
Tokyo 157-8510 (JP)**
• **ICHIGAYA, Atsuro
Tokyo 157-8510 (JP)**

(74) Representative: **SSM Sandmair
Patentanwälte Rechtsanwalt
Partnerschaft mbB
Joseph-Wild-Straße 20
81829 München (DE)**

(54) **INTRA PREDICTION DEVICE AND PROGRAM**

(57)     An intra prediction device for performing intra prediction in units of blocks obtained by dividing an image including each of a luma component and a chroma component includes: a grouping unit configured to determine a plurality of reference pixel groups by spatially grouping each of decoded reference pixels of the luma component and the chroma component according to positions thereof; and a model derivation unit configured to derive a plurality of prediction models by calculating, for each of the plurality of reference pixel groups, a prediction model for predicting a prediction-target block of the chroma component from a decoded block of the luma component.

FIG. 10

EP 4 787 837 A1

**Description**

[Technical Field]

The present disclosure relates to an intra prediction device and a program.

[Background Art]

In video encoding schemes such as HEVC (High Efficiency Video Coding) and/or VVC (Versatile Video Coding), an encoding device generates a prediction block by predicting a coding unit (CU) obtained by dividing an original image on a block-by-block basis, and transforms, quantizes, and entropy-encodes a prediction residual, which is a difference between the coding block of the original image and the prediction block, to transmit the encoded prediction residual.

The Joint Video Experts Team (JVET) (ISO/IEC JTC1 SC29 WG5), an international standardization working group for video encoding, has been studying ECM (Enhanced Compression Model), which is a next-generation video encoding technology. In the ECM, introduction of a prediction mode for a chroma component called MMLM (Multi Model Linear Model) has been studied as a mode for intra prediction, which is prediction considering correlation within a frame.

MMLM is an extension technology of CCLM (Cross Component Linear Model) employed in VVC. CCLM is a mode for predicting a prediction-target block of a chroma component using a decoded block of a luma component, and predicts the prediction-target block of the chroma component from the decoded block of the luma component at a corresponding position using a linear model (also referred to as a "prediction model"). Here, a reduced block obtained by downsampling the decoded block of the luma component is used according to a chroma format.

Such a prediction model is a linear model calculated by a least mean square method using decoded pixels adjacent to the prediction-target block of the chroma component (chroma reference pixels) and decoded pixels adjacent to the corresponding decoded block of the luma component (luma reference pixels). In VVC, luma and chroma reference pixels used for linear model calculation are limited to only some pixel positions, thereby achieving reduction in processing load.

CCLM assumes that there is a certain tendency in the distribution of luma and chroma components within a block. Therefore, when the distribution of luma and chroma components includes a plurality of tendencies, such as when an object boundary exists within a block, there is a problem that approximation accuracy significantly degrades. Accordingly, in MMLM described in Non Patent Literature 1, a plurality of distributions are assumed, the distribution of luma and chroma components is clustered using an average value of luma reference pixels as a threshold, and a linear model is calculated for each cluster, thereby preventing the degradation in approximation accuracy.

Specifically, in MMLM described in Non Patent Literature 1, reference pixels are grouped into two groups (two clusters) based on a threshold, and two linear models are derived from the two groups. Then, a linear model to be used for predicting the chroma block is selected for each pixel depending on whether or not a pixel value of the decoded block of the luma component corresponding to the prediction-target block of the chroma component is larger than the threshold. In this manner, each prediction pixel of the prediction-target block of the chroma component is generated while switching the linear model for each pixel of the decoded block of the luma component corresponding to the prediction-target block of the chroma component.

[Citation List]

[Non Patent Literature]

[NPL 1] JVET-D0110 "Enhanced Cross-component Linear Model Intra-prediction"

[Summary of Invention]

An intra prediction device according to a first aspect is a device that performs intra prediction in units of blocks obtained by dividing an image including each of a luma component and a chroma component. The intra prediction device comprises: a grouping unit configured to determine a plurality of reference pixel groups by spatially grouping each of decoded reference pixels of the luma component and the chroma component according to positions thereof; and a model derivation unit configured to derive a plurality of prediction models by calculating, for each of the plurality of reference pixel groups, a prediction model for predicting a prediction-target block of the chroma component from a decoded block of the luma component.

A program according to a second aspect causes a computer to function as the intra prediction device according to the first aspect.

[Brief Description of Drawings]

[Fig. 1] Fig. 1 is a diagram illustrating a configuration of an encoding device according to an embodiment.

[Fig. 2] Fig. 2 is a diagram for explaining an example of an intra prediction mode according to the embodiment.

[Fig. 3] Fig. 3 is a diagram illustrating a configuration of an inter-component prediction unit of an intra prediction unit on an encoding side according to the embodiment.

[Fig. 4] Fig. 4 is a diagram for explaining an operation of the inter-component prediction unit of the intra prediction unit according to the embodiment.

[Fig. 5] Fig. 5 is a diagram for explaining an example of an operation of the inter-component prediction unit of the intra prediction unit according to the embodiment.

[Fig. 6] Fig. 6 is a diagram for explaining an example of an operation of the inter-component prediction unit of the intra prediction unit according to the embodiment.

[Fig. 7] Fig. 7 is a diagram for explaining an example of an operation of the inter-component prediction unit of the intra prediction unit according to the embodiment.

[Fig. 8] Fig. 8 is a diagram for explaining an example of an operation of the inter-component prediction unit of the intra prediction unit according to the embodiment.

[Fig. 9] Fig. 9 is a diagram illustrating a configuration of a decoding device according to the embodiment.

[Fig. 10] Fig. 10 is a diagram illustrating a configuration of an inter-component prediction unit of an intra prediction unit on a decoding side according to the embodiment.

[Fig. 11] Fig. 11 is a diagram illustrating an example of an operation flow of inter-component prediction of the intra prediction unit according to the embodiment.

[Fig. 12] Fig. 12 is a diagram for explaining a first modification of the embodiment.

[Fig. 13] Fig. 13 is a diagram for explaining the first modification of the embodiment.

[Fig. 14] Fig. 14 is a diagram for explaining the first modification of the embodiment.

[Fig. 15] Fig. 15 is a diagram for explaining a second modification of the embodiment.

[Fig. 16] Fig. 16 is a diagram for explaining the second modification of the embodiment.

[Fig. 17] Fig. 17 is a diagram for explaining a third modification of the embodiment.

[Fig. 18] Fig. 18 is a diagram for explaining the third modification of the embodiment.

[Fig. 19] Fig. 19 is a diagram for explaining the third modification of the embodiment.

[Description of Embodiments]

A linear model created in conventional CCLM is one per coding-target block, and the same linear model is used for all pixels within the coding-target block. However, this is a prediction that does not use spatial features of reference pixels when creating the linear model. In addition, although MMLM described in Non Patent Literature 1 uses a plurality of linear models, this also creates the plurality of linear models according to a threshold of luma reference pixel values, and is not a prediction using spatial features of the reference pixels. Both of these methods have room for improvement in terms of enhancing prediction accuracy in intra prediction.

Therefore, an object of the present disclosure is to improve prediction accuracy in intra prediction using inter-component prediction.

With reference to the drawings, an encoding device and a decoding device each including an intra prediction device according to an embodiment will be described. The encoding device and the decoding device respectively perform encoding and decoding of video (i.e., moving images) represented by MPEG. In the following description of the drawings, the same or similar parts are denoted by the same or similar reference numerals.

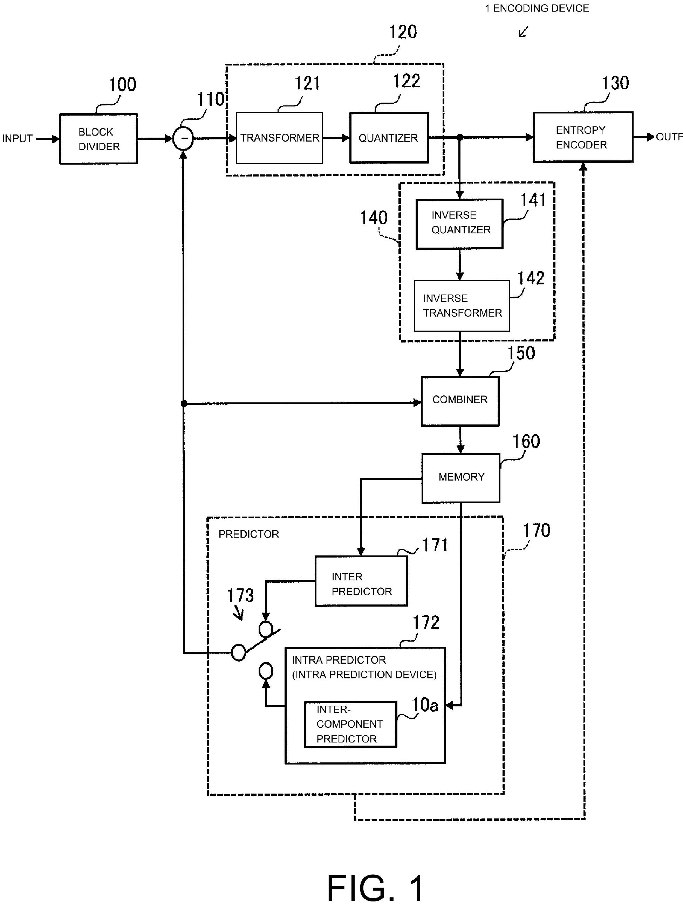

(1) Encoding Device With reference to Figs. 1 to 7, an encoding device according to the present embodiment will be described.

(1.1) Configuration of Encoding Device First, with reference to Fig. 1, a configuration of an encoding device 1 according to the present embodiment will be described. The encoding device 1 is a device that encodes an input image to generate a bitstream, and outputs the bitstream. The encoding device 1 includes a block divider 100, a subtractor 110, a transformer/quantizer 120, an entropy encoder 130, an inverse quantizer/inverse transformer 140, a combiner 150, a memory 160, and a predictor 170.

The block divider 100 divides an original image, which is an input image in units of frames (or pictures) constituting a moving image, into a plurality of image blocks, and outputs the image blocks obtained by the division to the subtractor 110. A size of the image block is, for example, 32×32 pixels, 16×16 pixels, 8×8 pixels, 4×4 pixels, or the like. A shape of the image block is not limited to a square, and may be a rectangle (non-square). The image block is a unit in which the encoding device 1 performs encoding and a unit in which the decoding device performs decoding. Such an image block is also referred to as a coding unit (CU).

Each pixel in the input image is composed of a luma component (Y) and chroma components (Cb, Cr). The encoding device 1 supports, for example, three chroma formats of 4:4:4, 4:2:2, and 4:2:0. The block divider 100 outputs a luma block by performing block partitioning on the luma component, and outputs a chroma block by performing block partitioning on the chroma components. A shape of the block partitioning may be the same for the luma component and the chroma components. The shape may be such that the partitioning shapes of the luma component and the chroma components are independently controllable.

The subtractor 110 calculates a prediction residual representing a difference (error) between a coding block output from the block divider 100 and a prediction block obtained by the predictor 170 predicting the coding block. Specifically, the subtractor 110 calculates the prediction residual by subtracting each pixel value of the prediction block from each pixel value of the block, and outputs the calculated prediction residual to the transformer/quantizer 120.

The transformer/quantizer 120 performs transform processing and quantization processing in units of blocks. The transformer/quantizer 120 includes a transformer 121 and a quantizer 122.

The transformer 121 calculates a transform coefficient by performing a transform process on a prediction residual output from the subtractor 110, and outputs the calculated transform coefficient to the quantizer 122. The transform refers to, for example, a discrete cosine transform (DCT: Discrete Cosine Transform) and/or a discrete sine transform (DST: Discrete Sine Transform), a Karhunen Loeve transform (KLT: Karhunen Loeve Transform), and the like. The transform process includes a transform skip in which the transform process is not performed. The transform skip also includes a transform in which the transform process is applied only horizontally and/or a transform in which the transform process is applied only vertically. Further, the transformer 121 may perform a secondary transform process in which a transform process is further applied to the transform coefficient obtained by the transform process. The secondary transform process may be applied to only a part of a region of the transform coefficient.

The quantizer 122 quantizes the transform coefficient output from the transformer 121 using a quantization parameter and a quantization matrix, and outputs a quantized transform coefficient, which is a quantized transform coefficient, to the entropy encoder 130 and the inverse quantizer/inverse transformer 140. Note that the quantization parameter is a parameter that is commonly applied to each transform coefficient within a block and that defines the coarseness of quantization. The quantization matrix is a matrix having, as elements, quantization values for quantizing each transform coefficient.

The entropy encoder 130 performs entropy encoding on the quantized transform coefficient output from the quantizer 122 and performs data compression to generate a bitstream, and outputs the bitstream to the outside of the encoding device 1. For the entropy encoding, a Huffman code and/or CABAC (Context-based Adaptive Binary Arithmetic Coding) or the like can be used. Note that the entropy encoder 130 receives information related to prediction (syntax such as a flag and/or an index) from the predictor 170, and also performs encoding and bitstream output of the input information.

The inverse quantizer/inverse transformer 140 performs an inverse quantization process and an inverse transform process in units of blocks. The inverse quantizer/inverse transformer 140 includes an inverse quantizer 141 and an inverse transformer 142.

The inverse quantizer 141 performs an inverse quantization process corresponding to the quantization process performed by the quantizer 122. Specifically, the inverse quantizer 141 reconstructs a transform coefficient by inverse-quantizing the quantized transform coefficient output from the quantizer 122 using the quantization parameter and the quantization matrix, and outputs the reconstructed transform coefficient to the inverse transformer 142.

The inverse transformer 142 performs an inverse transform process corresponding to the transform process performed by the transformer 121. For example, when the transformer 121 has performed the discrete cosine transform, the inverse transformer 142 performs an inverse discrete cosine transform. The inverse transformer 142 reconstructs a prediction residual by performing the inverse transform process on the transform coefficient output from the inverse quantizer 141, and outputs a reconstructed prediction residual, which is the reconstructed prediction residual, to the combiner 150.

The combiner 150 combines the reconstructed prediction residual output from the inverse transformer 142 with the prediction block output from the predictor 170 by adding them on a pixel-by-pixel basis. The combiner 150 decodes (reconstructs) a block by adding each pixel value of the reconstructed prediction residual and each pixel value of the prediction block, and outputs a reconstructed block to the memory 160. In the following, the reconstructed block is also referred to as a decoded block.

The memory 160 stores the reconstructed block output from the combiner 150, and accumulates the reconstructed block as a decoded image in units of frames. The memory 160 outputs the stored reconstructed block or decoded image to the predictor 170. Note that a loop filter may be provided between the combiner 150 and the memory 160.

The predictor 170 performs prediction in units of blocks. The predictor 170 includes an inter predictor 171, an intra predictor 172, and a switch 173. In the present embodiment, the intra predictor 172 constitutes an intra prediction device.

The inter predictor 171 calculates a motion vector by a method such as block matching using a decoded image stored in the memory 160 as a reference image, predicts a coding block to generate an inter prediction block, and outputs the generated inter prediction block to the switch 173. Here, the inter predictor 171 selects an optimal inter prediction method from inter prediction using a plurality of reference images (typically, bi-prediction) and/or inter prediction using one reference image (uni-prediction), and performs inter prediction using the selected inter prediction method. The inter predictor 171 outputs information related to the inter prediction (motion vector or the like) to the entropy encoder 130.

The intra predictor 172 generates an intra prediction block by referring to decoded pixels around a block among the decoded images stored in the memory 160, and outputs the generated intra prediction block to the switch 173. Generally, the intra predictor 172 selects an intra prediction mode to be applied to a predictive coding block of intra prediction from among a plurality of intra prediction modes, and predicts the coding block of the intra prediction using the selected intra prediction mode. The intra predictor 172 outputs information related to the selected intra prediction mode to the entropy encoder 130. The intra predictor 172 according to the present embodiment includes an inter-component predictor 10a that performs inter-component prediction. Details of the inter-component predictor 10a will be described later.

The switch 173 switches between the inter prediction block output from the inter predictor 171 and the intra prediction block output from the intra predictor 172, and outputs one of the prediction blocks to the subtractor 110 and the combiner 150.

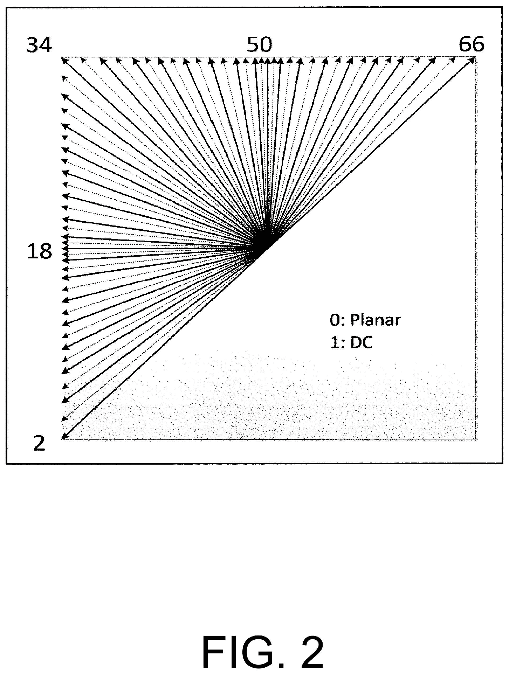

Fig. 2 is a diagram for explaining an example of an intra prediction mode according to the present embodiment. The intra predictor 172 performs intra prediction on a coding block. In the illustrated example, candidates for the intra prediction mode of a luma block are Planar prediction, DC prediction, and 65 types of directional prediction, and there are a total of 67 types of intra prediction modes.

Mode 0 of the prediction mode is Planar prediction, mode 1 of the prediction mode is DC prediction, and modes 2 to 66 of the prediction mode are directional prediction (Intra Angular). In the directional prediction, a direction of an arrow indicates a prediction direction (reference direction), a start point of the arrow indicates a position of a pixel to be predicted, and an end point of the arrow indicates a position of a reference pixel used for predicting the pixel to be predicted (also referred to as a "reference pixel position"). A total of 65 modes are prepared for the directional prediction, and a selectable prediction direction is determined by a shape (aspect ratio) of a block. In the illustrated example, the directional prediction is assumed to be in 65 directions, but the directional prediction may be in more than 65 directions or in less than 65 directions.

As prediction directions parallel to a diagonal line passing through an upper-right vertex and a lower-left vertex of a block, there are mode 2, which is a prediction mode referring to a lower-left direction, and mode 66, which is a prediction mode referring to an upper-right direction, and mode numbers are assigned every predetermined angle clockwise from mode 2 to mode 66. Mode 34 is a prediction mode referring to an upper-left direction. Specifically, when the horizontal direction is 0°, the prediction direction of mode 2 is -45°, the prediction direction of mode 18 is 0°, the prediction direction of mode 34 is 45°, the prediction direction of mode 50 is 90°, and the prediction direction of mode 66 is 135°. Note that mode 18 is also referred to as horizontal prediction, and mode 50 is also referred to as vertical prediction.

Here, each directional prediction less than mode 34, i.e., modes 2 to 33, is directional prediction referring to the left side of the coding block, and its prediction direction is the leftward direction of the coding block. On the other hand, each directional prediction greater than mode 34, i.e., modes 35 to 66, is directional prediction referring to the upper side of the coding block, and its prediction direction is the upward direction of the coding block.

On the other hand, the number of candidates for the intra prediction mode of a chroma block is smaller than the number of candidates for the intra prediction mode of a luma block. Specifically, in intra prediction of the chroma block, the intra predictor 172 determines, as a first candidate mode, an intra prediction mode used for intra prediction of a luma block at a position corresponding to the position of the chroma block, determines a second candidate mode that does not overlap with the first candidate mode, and selects an intra prediction mode to be used for the intra prediction of the chroma block from among these candidate modes. Such a first candidate mode is referred to as DM (Direct Mode or Derived Mode).

Further, when any of the default modes predetermined as the second candidate mode overlaps with the first candidate mode (DM), the intra predictor 172 may determine an alternative mode to be used as the second candidate mode instead of the overlapping default mode. Here, the default modes are a Planar mode (mode 0), a vertical mode (mode 50), a horizontal mode (mode 18), and a DC mode (mode 1). As the alternative mode, a fixed intra prediction mode other than the default modes, for example, mode 66 is used.

Note that the luma block at the position corresponding to the position of the chroma block (also referred to as a "luma block corresponding to the chroma block") refers to a luma block at the same position as the position of the chroma block when the block partitioning shapes of the luma block and the chroma block are the same. However, when the luma block partitioning shape and the chroma block partitioning shape can be independently controlled, the luma block at the position corresponding to the position of the chroma block refers to a luma block including coordinates corresponding to a predefined pixel position in the chroma block (for example, upper-left coordinates of the chroma block). Here, the coordinates corresponding to the predefined pixel position in the chroma block are not necessarily the same coordinates because the sizes of the luma and chroma components may be different in a chroma format such as 4:2:0.

Furthermore, there is inter-component prediction as an intra prediction mode unique to the chroma block. In the inter-component prediction, a linear model is derived from each of decoded reference pixels of a luma component and a chroma component around a prediction-target block of the chroma component, and the prediction-target block is predicted from a decoded block of the luma component corresponding to the prediction-target block of the chroma component using the linear model. In the inter-component prediction according to the present embodiment, CCLM employed in VVC is extended, a plurality of linear models are derived for one prediction-target block, and the prediction-target block of the chroma component is predicted using the plurality of linear models.

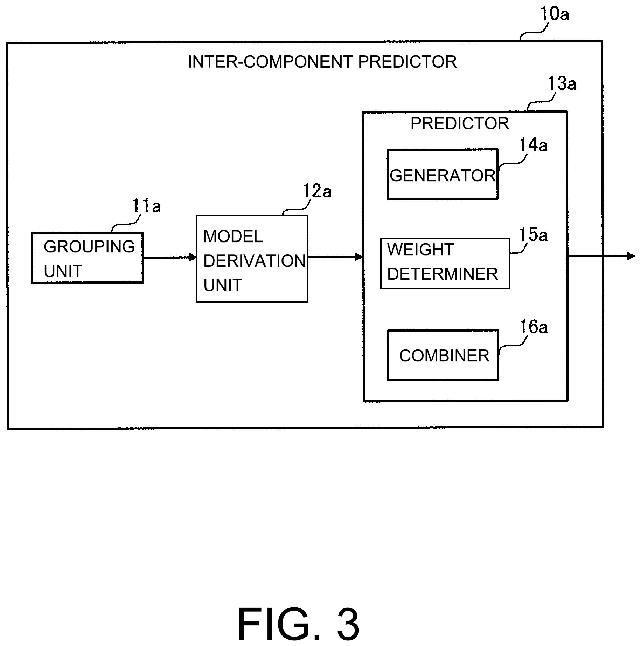

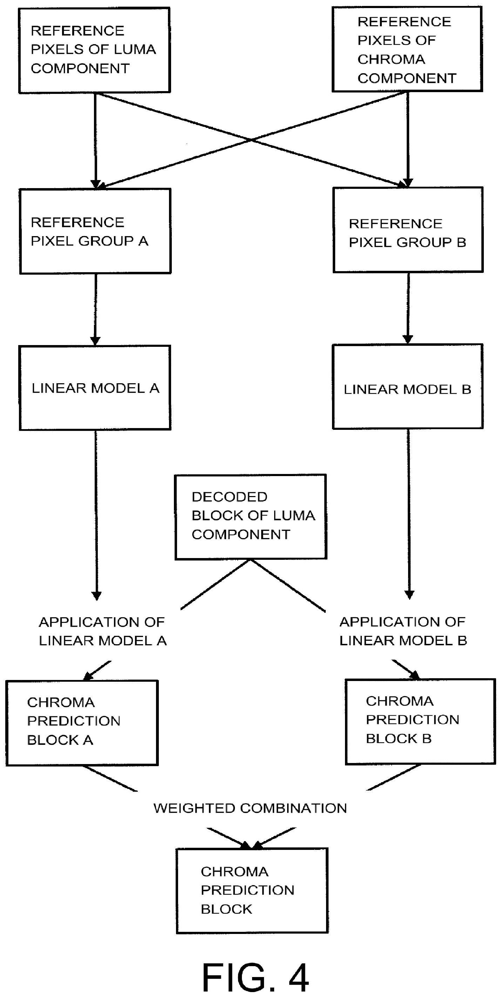

(1.2) Configuration of Inter-component Predictor 10a Next, with reference to Figs. 3 and 4, a configuration of an inter-component predictor 10a of the intra predictor 172 according to the present embodiment will be described. The intra predictor 172 corresponds to an intra prediction device that performs intra prediction in units of blocks obtained by dividing an image including each component of a luma component and a chroma component. The inter-component predictor 10a includes a grouping unit 11a, a model derivation unit 12a, and a predictor 13a.

As illustrated in Fig. 3, the grouping unit 11a determines a plurality of reference pixel groups by spatially grouping each of decoded reference pixels of the luma component and the chroma component according to positions thereof. In the present embodiment, as illustrated in Fig. 4, the reference pixels are spatially grouped into two reference pixel groups (reference pixel group A and reference pixel group B) according to a predetermined rule, but the reference pixels may be spatially grouped into three or more reference pixel groups.

Note that in MMLM described in Non Patent Literature 1, since reference pixels are grouped into two groups using an average value of reference pixels of the luma component as a threshold, reference pixels in each group may be spatially discrete. In contrast, in the present embodiment, since the reference pixels are spatially grouped according to the positions thereof, the reference pixels in each group can be spatially continuous (aggregated). Specifically, in the present embodiment, each of the plurality of reference pixel groups is composed of a plurality of spatially adjacent reference pixels. This makes it possible to perform prediction using spatial features of the reference pixels.

The model derivation unit 12a derives a plurality of prediction models by calculating, for each of the plurality of reference pixel groups determined by the grouping unit 11a, a prediction model for predicting a prediction-target block of the chroma component from a decoded block of the luma component. That is, the model derivation unit 12a derives a plurality of prediction models by calculating a prediction model for each reference pixel group. Note that in the present embodiment, a linear model is used as the prediction model. For example, as illustrated in Fig. 4, the model derivation unit 12a derives a linear model A from the reference pixel group A, and derives a linear model B from the reference pixel group B.

The predictor 13a predicts the prediction-target block of the chroma component from the decoded block of the luma component using the plurality of prediction models (plurality of linear models) derived by the model derivation unit 12a, and outputs a prediction block corresponding to the prediction-target block. The predictor 13a includes a generator 14a, a weight determiner 15a, and a combiner 16a.

The generator 14a generates a plurality of chroma prediction blocks from the decoded block of the luma component corresponding to the prediction-target block of the chroma component using the plurality of linear models derived by the model derivation unit 12a. That is, the generator 14a applies each linear model derived by the model derivation unit 12a to the decoded block of the luma component, and generates a prediction block of the chroma component for each linear model. For example, as illustrated in Fig. 4, the generator 14a generates a chroma prediction block A by applying the linear model A to the decoded block of the luma component, and generates a chroma prediction block B by applying the linear model B to the decoded block of the luma component.

The weight determiner 15a determines, for each pixel, a weight coefficient to be used when synthesizing a plurality of chroma prediction blocks by weighted synthesis. In the present embodiment, the weight determiner 15a determines the weight coefficient for each pixel based on the position of the pixel. However, the weight determiner 15a may use a predetermined fixed weight coefficient regardless of the position of the pixel. For example, the weight determiner 15a may determine 0.5 as the weight coefficient so as to equally synthesize the chroma prediction block A and the chroma prediction block B. Alternatively, the weight determiner 15a may adaptively derive the weight coefficient for each pixel based on a grouping status of reference pixels, and/or a shape and/or a size of a coding-target block. The weight determiner 15a may transmit (signal) information of the weight coefficient to a decoding side via the entropy encoder 130.

The combiner 16a synthesizes the plurality of chroma prediction blocks generated by the generator 14a by weighted synthesis, and outputs a chroma prediction block corresponding to the prediction-target block of the chroma component. For example, as illustrated in Fig. 4, the combiner 16a synthesizes the chroma prediction block A and the chroma prediction block B by weighted synthesis and outputs the synthesized block.

Note that in MMLM described in Non Patent Literature 1, two linear models are switched for each pixel and applied alternatively depending on whether or not a pixel value of a decoded block of a luma component is larger than a threshold. In this case, since different linear models can be applied to each pixel, discontinuity occurs between generated prediction pixels, and image quality is likely to degrade. In contrast, in the present embodiment, two prediction blocks are generated using two linear models, and the two prediction blocks are synthesized by weighted synthesis. Therefore, such discontinuity does not occur, and image quality is unlikely to degrade.

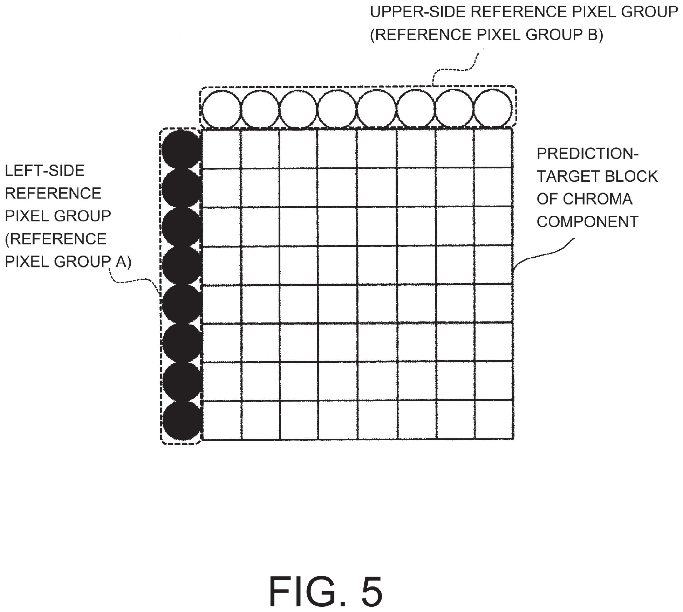

(1.3) Example of Operation of Inter-component Predictor 10a Next, with reference to Figs. 5 to 8, an example of an operation of the inter-component predictor 10a of the intra predictor 172 according to the present embodiment will be described.

As illustrated in Fig. 5, the grouping unit 11a determines a plurality of reference pixel groups by spatially grouping each of decoded reference pixels of the luma component and the chroma component according to positions thereof. In the present embodiment, the grouping unit 11a determines reference pixels on the left side of the prediction-target block of the chroma component and reference pixels on the left side of the corresponding decoded block of the luma component as a reference pixel group A, and determines reference pixels on the upper side of the prediction-target block of the chroma component and reference pixels on the upper side of the corresponding decoded block of the luma component as a reference pixel group B. In the illustrated example, the prediction-target block of the chroma component has a square shape of 8x8 pixels, but the prediction-target block of the chroma component may have a non-square shape.

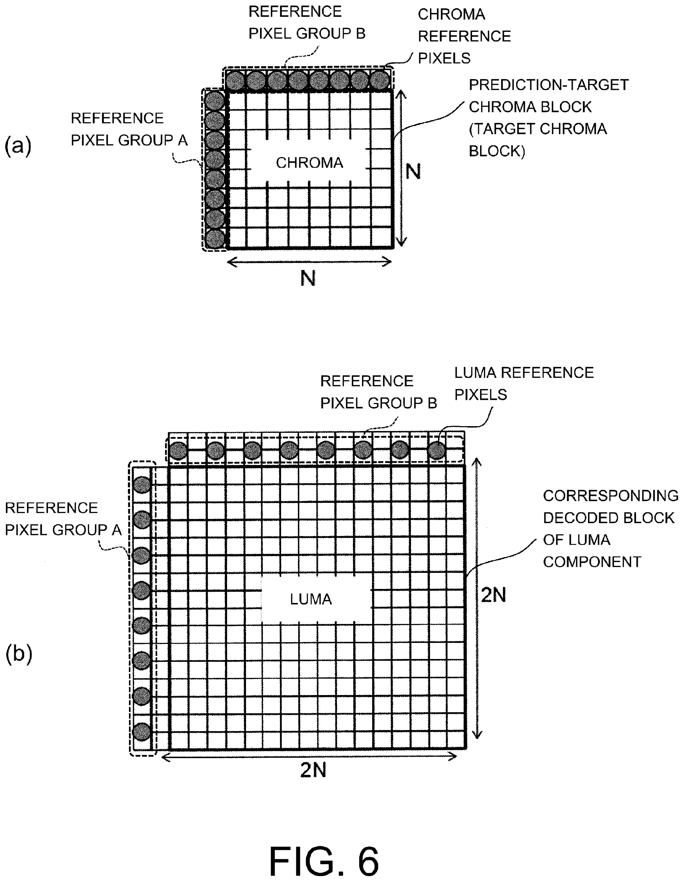

Note that, as illustrated in Fig. 6, the inter-component prediction is a mode for predicting a prediction-target block of a chroma component (Fig. 6(a)) using a decoded block of a luma component (Fig. 6(b)), and predicts each pixel of the prediction-target block of the chroma component from a corresponding pixel of the decoded block of the luma component using a linear model. Here, a reduced block obtained by downsampling the decoded block of the luma component may be used according to a chroma format. For example, when the chroma format is a 4:2:0 format, since the luma component has an area twice as large as the chroma component in both vertical and horizontal directions, a reduced block obtained by downsampling the decoded block of the luma component to 1/2 size in both vertical and horizontal directions is used.

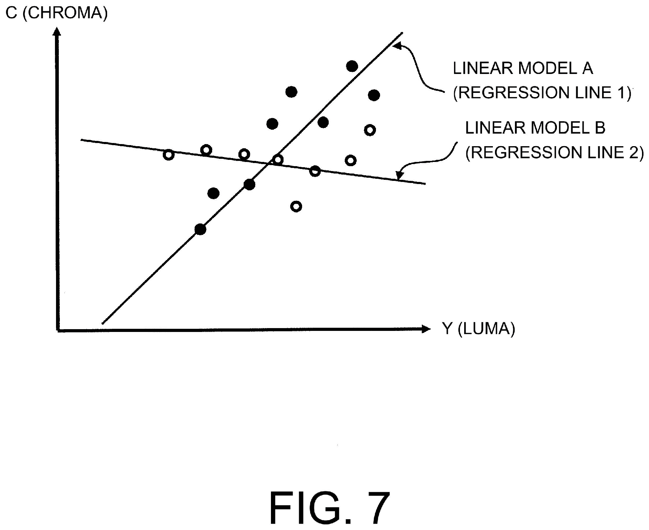

As illustrated in Fig. 7, the model derivation unit 12a derives a linear model A from the reference pixel group A, and derives a linear model B from the reference pixel group B. The linear model corresponds to a regression line calculated by a least mean square method for each reference pixel group. Here, the linear model can be expressed by, for example:

$Pred\_c = a \times Rec\_y + b$ where Pred_c denotes a prediction pixel of the chroma component, and Rec_y denotes a corresponding decoded pixel of the luma component. a and b are coefficients, and the model derivation unit 12a can set different values for a and b in the linear model A and the linear model B, respectively. The model derivation unit 12a may derive the linear model A and the linear model B by calculating coefficients a and b such that $\arg\min_{\{a, b\}} [Ref\_c - (a \times Ref\_l + b)]$ using chroma reference pixels (Ref_c) adjacent to the prediction-target block of the chroma component and luma reference pixels (Ref_l) at positions corresponding to the chroma reference pixels.

The generator 14a generates a chroma prediction block A by applying the linear model A to the decoded block of the luma component, and generates a chroma prediction block B by applying the linear model B to the decoded block of the luma component.

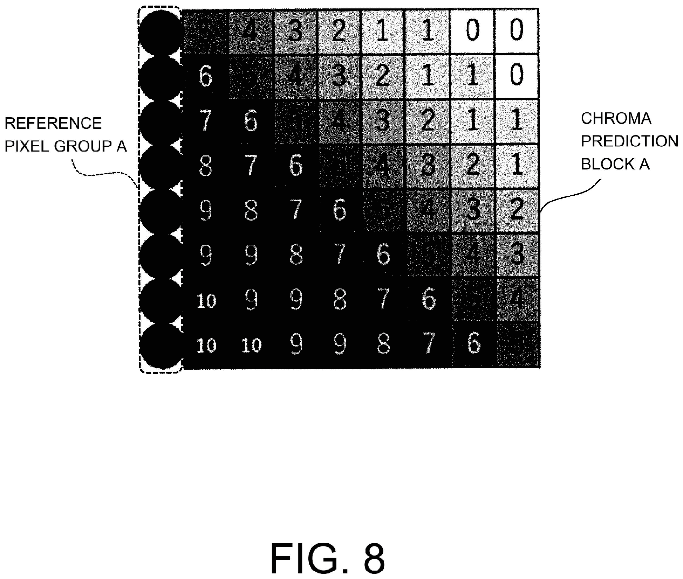

The weight determiner 15a determines, for each pixel, a weight coefficient to be used when synthesizing the chroma prediction block A and the chroma prediction block B by weighted synthesis based on a position of the pixel. Fig. 8 is a diagram illustrating an example of weight coefficients to be applied to the chroma prediction block A generated using the linear model A. In the illustrated example, for each prediction pixel of the chroma prediction block A, the weight determiner 15a determines a larger weight as the position is closer to the position of the reference pixel group A (left side of the block), and determines a smaller weight as the position is closer to the position of the reference pixel group B (upper side of the block). Therefore, each weight coefficient to be applied to the chroma prediction block A is determined such that the weight coefficient decreases from the lower-left toward the upper-right of the chroma prediction block A.

On the other hand, for each prediction pixel of the chroma prediction block B generated using the linear model B, the weight determiner 15a determines a larger weight as the position is closer to the position of the reference pixel group B (upper side of the block), and determines a smaller weight as the position is closer to the position of the reference pixel group A (left side of the block). Therefore, each weight coefficient to be applied to the chroma prediction block B is determined such that the weight coefficient increases from the lower-left toward the upper-right of the chroma prediction block B.

The combiner 16a synthesizes the chroma prediction block A and the chroma prediction block B by weighted synthesis using the weight coefficients determined by the weight determiner 15a, and outputs the synthesized block.

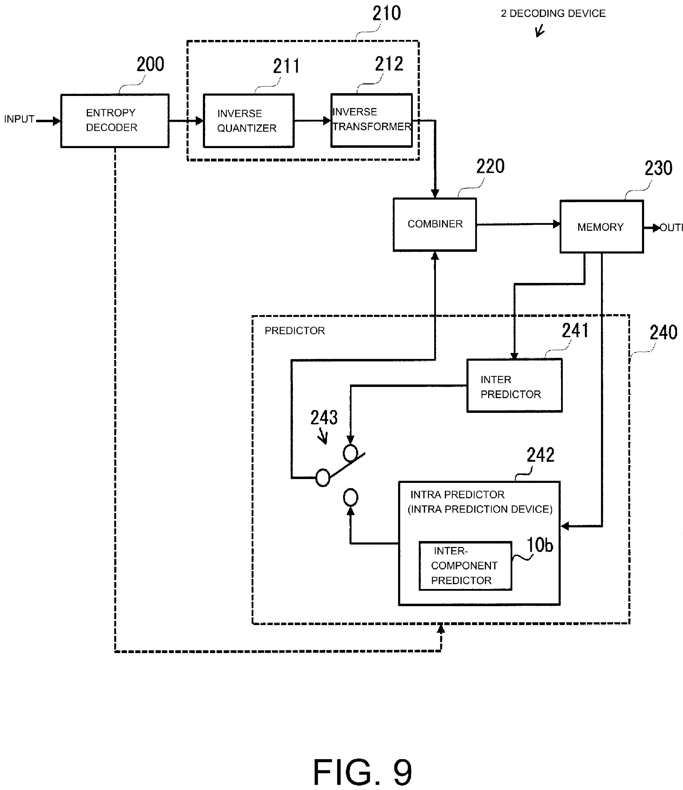

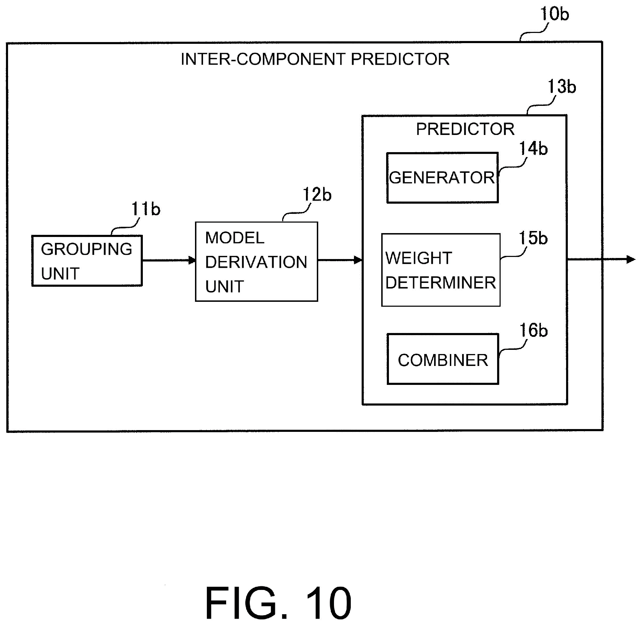

(2) Decoding Device Next, with reference to Figs. 9 and 10, a decoding device 2 according to the present embodiment will be described.

Fig. 9 is a diagram illustrating a configuration of the decoding device 2 according to the present embodiment. The decoding device 2 is a device that derives and outputs a decoded image from an input bitstream. The decoding device 2 includes an entropy decoder 200, an inverse quantizer/inverse transformer 210, a combiner 220, a memory 230, and a predictor 240.

The entropy decoder 200 decodes the bitstream generated by the encoding device 1, and outputs quantized transform coefficients to the inverse quantizer/inverse transformer 210. Further, the entropy decoder 200 acquires information related to prediction (intra prediction and inter prediction), and outputs the acquired information to the predictor 240. In the present embodiment, the entropy decoder 200 may acquire a flag indicating that inter-component prediction is to be applied, and may output the flag to the predictor 240. The entropy decoder 200 may acquire information of weight coefficients, and may output the information to the predictor 240.

The inverse quantizer/inverse transformer 210 performs an inverse quantization process and an inverse transform process in units of blocks. The inverse quantizer/inverse transformer 210 includes an inverse quantizer 211 and an inverse transformer 212.

The inverse quantizer 211 performs an inverse quantization process corresponding to the quantization process performed by the quantizer 122 of the encoding device 1. The inverse quantizer 211 reconstructs transform coefficients of a coding block by inverse-quantizing the quantized transform coefficients output from the entropy decoder 200 using a quantization parameter and a quantization matrix, and outputs the reconstructed transform coefficients to the inverse transformer 212.

The inverse transformer 212 performs an inverse transform process corresponding to the transform process performed by the transformer 121 of the encoding device 1. The inverse transformer 212 performs the inverse transform process on the transform coefficients output from the inverse quantizer 211 to reconstruct a prediction residual, and outputs a reconstructed prediction residual, which is the reconstructed prediction residual, to the combiner 220. The inverse transform process includes a transform skip in which the inverse transform process is not performed. Further, the inverse transformer 212 may perform an inverse secondary transform process in which an inverse transform process is further applied to a component obtained by the inverse transform process.

The combiner 220 combines the prediction residual output from the inverse transformer 212 with a prediction block output from the predictor 240 by adding them on a pixel-by-pixel basis, decodes (reconstructs) an original block, and outputs a reconstructed block to the memory 230.

The memory 230 stores the reconstructed block output from the combiner 220, and accumulates the reconstructed block as a decoded image in units of frames. The memory 230 outputs the stored reconstructed block or decoded image to the predictor 240. Further, the memory 230 outputs the decoded image in units of frames to the outside of the decoding device 2. Note that a loop filter may be provided between the combiner 220 and the memory 230.

The predictor 240 performs prediction in units of blocks. The predictor 240 includes an inter predictor 241, an intra predictor 242, and a switch 243. In the present embodiment, the intra predictor 242 constitutes an intra prediction device.

The inter predictor 241 predicts a coding block by inter prediction using a decoded image stored in the memory 230 as a reference image. The inter predictor 241 generates an inter prediction block by performing inter prediction according to motion vector information or the like output from the entropy decoder 200, and outputs the generated inter prediction block to the switch 243.

The intra predictor 242 generates an intra prediction block by referring to decoded pixels around a block to be predicted (a coding block) among decoded images stored in the memory 230, and outputs the generated intra prediction block to the switch 243. The intra predictor 242 according to the present embodiment includes an inter-component predictor 10b that performs inter-component prediction.

The switch 243 switches between an inter prediction block output from the inter predictor 241 and the intra prediction block output from the intra predictor 242, and outputs one of the prediction blocks to the combiner 220.

Fig. 10 is a diagram illustrating a configuration of the inter-component predictor 10b of the intra predictor 242 according to the present embodiment.

The inter-component predictor 10b includes a grouping unit 11b, a model derivation unit 12b, and a predictor 13b. The predictor 13b includes a generator 14b, a weight determiner 15b, and a combiner 16b.

The grouping unit 11b, the model derivation unit 12b, and the predictor 13b (the generator 14b, the weight determiner 15b, and the combiner 16b) respectively perform same processes as those of the grouping unit 11a, the model derivation unit 12a, and the predictor 13a (the generator 14a, the weight determiner 15a, and the combiner 16a) of the inter-component predictor 10a on an encoding side.

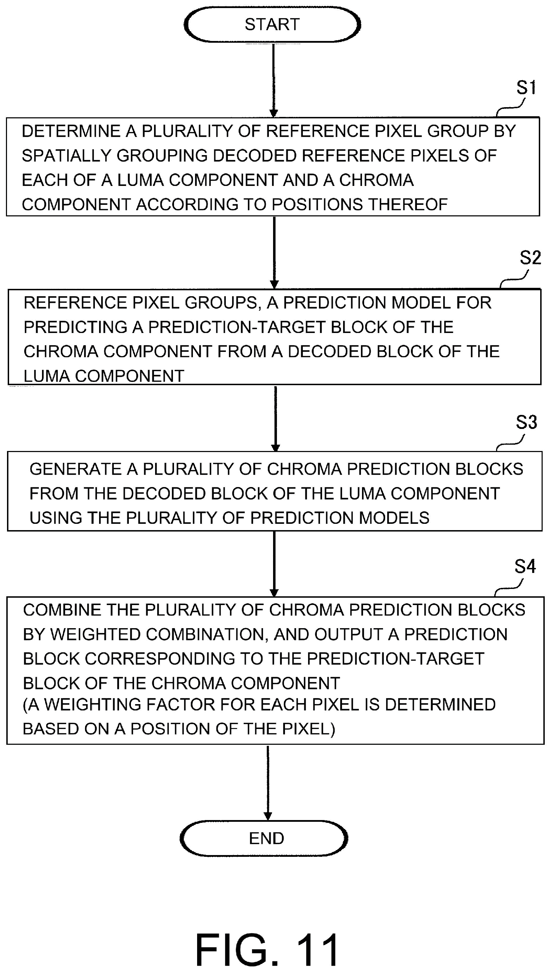

(3) Example of Operation Flow of Inter-component Prediction Next, an example of an operation flow of inter-component prediction according to the present embodiment will be described with reference to Fig. 11. Here, an operation of the inter-component predictor 10b on a decoding side will be described as an example, but the inter-component predictor 10a on the encoding side also performs an operation similar to that of the inter-component predictor 10b on the decoding side. The inter-component predictor 10b on the decoding side performs the following operation when a flag indicating that inter-component prediction is to be applied to a chroma block to be decoded is signaled from the encoding side.

In step S1, the grouping unit 11b determines a plurality of reference pixel groups by spatially grouping each of decoded reference pixels of a luma component and a chroma component according to positions thereof.

In step S2, the model derivation unit 12b derives a plurality of linear models by calculating, for each of the plurality of reference pixel groups determined by the grouping unit 11b, a linear model for predicting a prediction-target block of the chroma component from a decoded block of the luma component. That is, the model derivation unit 12b derives the plurality of linear models by calculating a linear model for each reference pixel group.

In step S3, the generator 14b generates a plurality of chroma prediction blocks from the decoded block of the luma component corresponding to the prediction-target block of the chroma component using the plurality of linear models derived by the model derivation unit 12b. That is, the generator 14b applies each linear model derived by the model derivation unit 12b to the decoded block of the luma component, and generates a prediction block of the chroma component for each linear model.

In step S4, the combiner 16b synthesizes the plurality of chroma prediction blocks generated by the generator 14b by weighted synthesis, and outputs a prediction block of the chroma component corresponding to the prediction-target block of the chroma component. Here, the weight determiner 15a determines, for each pixel, a weight coefficient to be used for the weighted synthesis. In the present embodiment, the weight determiner 15a determines the weight coefficient for each pixel based on a position of the pixel.

(4) Summary of Embodiment The inter-component predictor 10 (10a, 10b) according to the embodiment includes a grouping unit 11 (11a, 11b) configured to determine a plurality of reference pixel groups by spatially grouping each of decoded reference pixels of a luma component and a chroma component according to positions thereof, and a model derivation unit 12 (12a, 12b) configured to derive a plurality of linear models by calculating, for each of the plurality of reference pixel groups, a linear model for predicting a prediction-target block of the chroma component from a decoded block of the luma component. Since the reference pixels are spatially grouped according to the positions thereof in this manner, the reference pixels in each reference pixel group can be spatially continuous (aggregated). In the present embodiment, each of the plurality of reference pixel groups is composed of a plurality of spatially adjacent reference pixels. This makes it possible to perform prediction using spatial features of the reference pixels.

The inter-component predictor 10 (10a, 10b) according to the embodiment further includes a predictor 13 (13a, 13b) that predicts the prediction-target block of the chroma component from the decoded block of the luma component using the plurality of linear models. The predictor 13 (13a, 13b) includes a generator 14 (14a, 14b) configured to generate a plurality of chroma prediction blocks from the decoded block of the luma component using the plurality of linear models, and a combiner 16 (16a, 16b) configured to synthesize the plurality of chroma prediction blocks by weighted synthesis and output a prediction block corresponding to the prediction-target block of the chroma component. In this manner, since the plurality of prediction blocks are generated using the plurality of linear models and the plurality of prediction blocks are synthesized by weighted synthesis, discontinuity does not occur between predicted pixels and image quality is unlikely to degrade, as compared with a case where a prediction model is switched on a pixel-by-pixel basis and applied alternatively.

The predictor 13 (13a, 13b) further includes a weight determiner 15 (15a, 15b) that determines, for each pixel, a weight coefficient to be used for the weighted synthesis. The weight determiner 15 (15a, 15b) determines the weight coefficient for each pixel based on a position of the pixel. Thus, the weight determiner 15 (15a, 15b) can determine, for the chroma prediction block, the weight coefficient such that a larger weight coefficient is assigned to a predicted pixel close to the position of the reference pixel group used when generating the chroma prediction block (i.e., a predicted pixel estimated to have high prediction accuracy) and a smaller weight coefficient is assigned to a predicted pixel far from the position of the reference pixel group (i.e., a predicted pixel estimated to have low prediction accuracy). Therefore, the spatial features of the reference pixels can be further utilized.

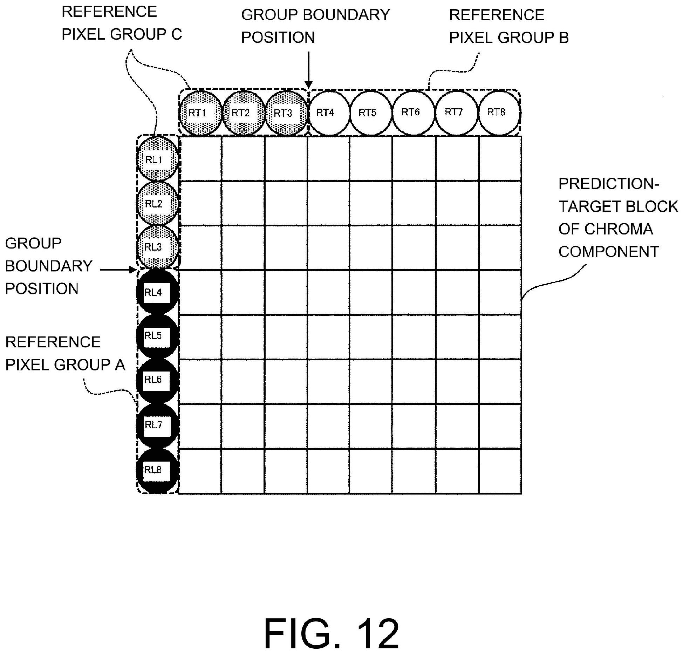

(5) First Modification Example Next, a first modification example of the above-described embodiment will be described with reference to Figs. 12 to 14.

In the above-described embodiment, the grouping unit 11 (11a, 11b) spatially grouped reference pixels into two reference pixel groups (a left reference pixel group A and an upper reference pixel group B) according to a predetermined rule. However, the grouping unit 11 (11a, 11b) may spatially group the reference pixels into three or more reference pixel groups.

In addition, the number of reference pixel groups by grouping may be variable. In this case, the grouping unit 11a on the encoding side may transmit (signal) information indicating the number of reference pixel groups by grouping to the decoding side via the entropy encoder 130. On the decoding side, the entropy decoder 200 acquires the information indicating the number of reference pixel groups by the grouping, and the grouping unit 11b on the decoding side may identify the number of reference pixel groups by the grouping based on the information. Alternatively, the grouping unit 11 (11a, 11b) may determine the number of reference pixel groups by the grouping (or an upper limit thereof) according to a block size of a target block (a coding-target block or a decoding-target block). For example, the grouping unit 11 (11a, 11b) may determine to increase the number of reference pixel groups by the grouping (or the upper limit thereof) as the block size increases.

In the example of Fig. 12, the grouping unit 11 (11a, 11b) spatially groups the reference pixels into three reference pixel groups (reference pixel groups A to C). Specifically, the grouping unit 11 (11a, 11b) groups five reference pixels in a range from a lower-left direction to a horizontal direction of the block into a group A, groups five reference pixels in a range from a vertical direction to an upper-right direction of the block into a group B, and groups other six reference pixels into a group C.

In the example of Fig. 12, the prediction-target block of the chroma component has a size of 8x8, but in a case of other block sizes, the grouping unit 11 (11a, 11b) determines reference pixels constituting each reference pixel group according to a relative positional relationship of each reference pixel group with respect to the block. Therefore, if the number of reference pixel groups by the grouping is determined, the grouping unit 11 (11a, 11b) can commonly determine the reference pixels constituting each reference pixel group on the encoding side and the decoding side.

The grouping unit 11 (11a, 11b) may change a boundary position between reference pixel groups by performing grouping based on correlation of pixel values between the reference pixels.

In the example of Fig. 12, regarding an uppermost reference pixel RL4 in the reference pixel group A, the grouping unit 11 (11a, 11b) may include the reference pixel RL4 in the reference pixel group C when a difference in pixel value with a lowermost reference pixel RL3 in the reference pixel group C is smaller than a difference in pixel value with a second reference pixel RL5 from the top in the reference pixel group A. In this case, the boundary position between the reference pixel group A and the reference pixel group C is changed downward by one pixel.

Regarding the lowermost reference pixel RL3 in the reference pixel group C, the grouping unit 11 (11a, 11b) may include the reference pixel RL3 in the reference pixel group A when a difference in pixel value with the uppermost reference pixel RL4 in the reference pixel group A is smaller than a difference in pixel value with a second reference pixel RL2 from the bottom in the reference pixel group C. In this case, the boundary position between the reference pixel group A and the reference pixel group C is changed upward by one pixel.

Regarding a leftmost reference pixel RT4 in the reference pixel group B, the grouping unit 11 (11a, 11b) may include the reference pixel RT4 in the reference pixel group C when a difference in pixel value with a rightmost reference pixel RT3 in the reference pixel group C is smaller than a difference in pixel value with a second reference pixel RT5 from the left in the reference pixel group B. In this case, the boundary position between the reference pixel group A and the reference pixel group C is changed to the right by one pixel.

Regarding the rightmost reference pixel RT3 in the reference pixel group C, the grouping unit 11 (11a, 11b) may include the reference pixel RT3 in the reference pixel group B when a difference in pixel value with the leftmost reference pixel RT4 in the reference pixel group B is smaller than a difference in pixel value with a second reference pixel RT2 from the right in the reference pixel group C. In this case, the boundary position between the reference pixel group A and the reference pixel group C is changed to the left by one pixel.

Note that the grouping unit 11 (11a, 11b) is not limited to the grouping based on the correlation (difference) of pixel values between adjacent reference pixels as described above, and may calculate a statistical value (for example, variance) by statistical processing on the pixel values of each reference pixel, and perform grouping based on the calculated statistical value. Further, the grouping unit 11 (11a, 11b) is not limited to the grouping based on the correlation of pixel values of reference pixels of the chroma component as described above, and may perform grouping based on the correlation of pixel values of reference pixels of the luma component. The grouping unit 11 (11a, 11b) may perform grouping based on the correlation of pixel values of reference pixels of both the luma component and the chroma component.

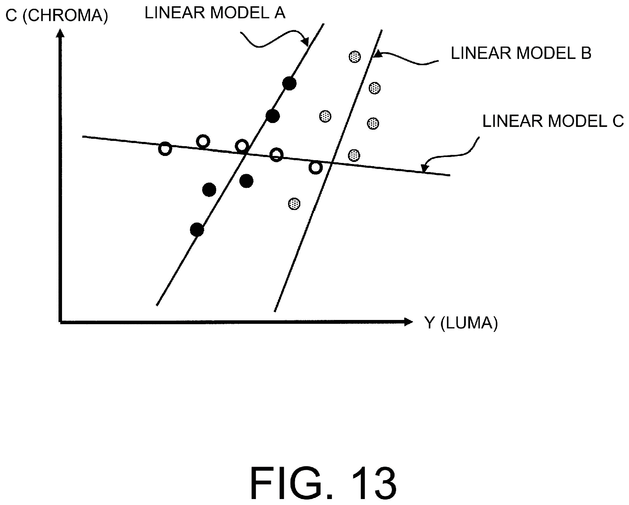

As illustrated in Fig. 13, the model derivation unit 12 (12a, 12b) derives three linear models by calculating a linear model for each of the reference pixel groups A to C as illustrated in Fig. 12. Specifically, the model derivation unit 12 (12a, 12b) derives linear models A to C by calculating the linear model A from the reference pixel group A, calculating the linear model B from the reference pixel group B, and calculating the linear model C from the reference pixel group C.

Then, the generator 14 (14a, 14b) generates three chroma prediction blocks from a decoded block of the luma component using the three linear models. Specifically, the generator 14 (14a, 14b) generates a chroma prediction block A from the decoded block of the luma component using the linear model A, generates a chroma prediction block B from the decoded block of the luma component using the linear model B, and generates a chroma prediction block C from the decoded block of the luma component using the linear model C.

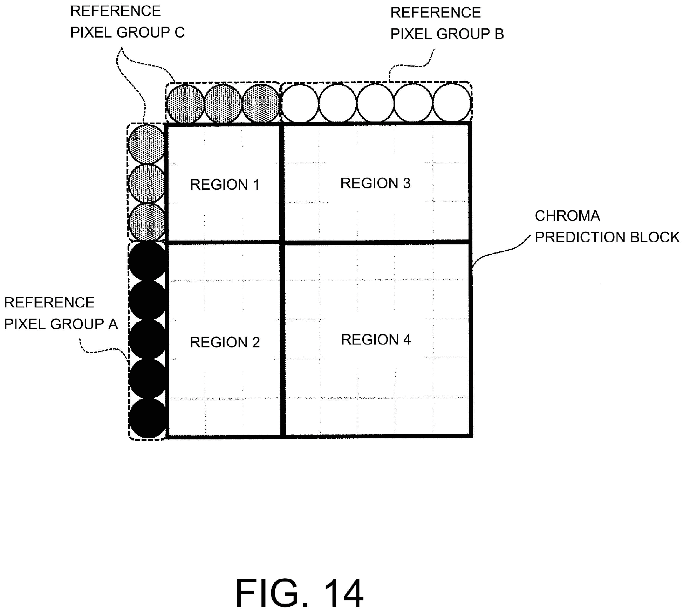

The combiner 16 (16a, 16b) combines the three chroma prediction blocks (chroma prediction blocks A to C) by weighted synthesis, and outputs a prediction block corresponding to a prediction-target block of the chroma component. Here, the weight determiner 15 (15a, 15b) determines a weight coefficient for each pixel based on a position of the pixel. In the example of Fig. 14, the weight determiner 15 (15a, 15b) divides the prediction block of the chroma component into four regions (regions 1 to 4), and performs different weighting for each region. Such a region may be referred to as a sub-block.

For example, first, the weight determiner 15 (15a, 15b) sets a rectangular region (sub-block) 1 adjacent to the reference pixel group C, and determines, for each prediction pixel in the region 1, the weight coefficient of the chroma prediction block C to be larger than each of the weight coefficients of the chroma prediction blocks A and B. In this case, the weight determiner 15 (15a, 15b) may determine 0.6 as the weight coefficient of the chroma prediction block C and determine 0.2 as each of the weight coefficients of the chroma prediction blocks A and B for each prediction pixel Prec_c in the region 1. The combiner 16 (16a, 16b) performs weighted synthesis as follows for each prediction pixel in the region 1:

$$\mathrm{Pred\_c} = 0.2 \times \mathrm{Pred\_c\_A} + 0.2 \times \mathrm{Pred\_c\_B} + 0.2 \times \mathrm{Pred\_c\_C}$$

Where Pred_c_A is a prediction pixel of the chroma prediction block A, Pred_c_B is a prediction pixel of the chroma prediction block B, and Pred_c_C is a prediction pixel of the chroma prediction block C.

Note that the weight determiner 15 (15a, 15b) may determine 1 as the weight coefficient of the chroma prediction block C and determine 0 as each of the weight coefficients of the chroma prediction blocks A and B for each prediction pixel Prec_c in the region 1. In this case, the region 1 is entirely composed of the chroma prediction block C. However, when such weighting is performed, discontinuity may occur between regions.

Second, the weight determiner 15 (15a, 15b) sets a rectangular region (sub-block) 2 adjacent to the reference pixel group A, and determines, for each prediction pixel in the region 2, the weight coefficient of the chroma prediction block A to be larger than each of the weight coefficients of the chroma prediction blocks B and C. In this case, the weight determiner 15 (15a, 15b) may determine 0.6 as the weight coefficient of the chroma prediction block A and determine 0.2 as each of the weight coefficients of the chroma prediction blocks B and C for each prediction pixel Prec_c in the region 2. The combiner 16 (16a, 16b) performs weighted synthesis as follows for each prediction pixel in the region 2:

$$\mathrm{Pred\_c} = 0.6 \times \mathrm{Pred\_c\_A} + 0.2 \times \mathrm{Pred\_c\_B} + 0.2 \times \mathrm{Pred\_c\_C}.$$

Third, the weight determiner 15 (15a, 15b) sets a rectangular region (sub-block) 3 adjacent to the reference pixel group B, and determines, for each prediction pixel in the region 3, the weight coefficient of the chroma prediction block B to be larger than each of the weight coefficients of the chroma prediction blocks A and C. In this case, the weight determiner 15 (15a, 15b) may determine 0.6 as the weight coefficient of the chroma prediction block B and determine 0.2 as each of the weight coefficients of the chroma prediction blocks A and C for each prediction pixel Prec_c in the region 3. The combiner 16 (16a, 16b) performs weighted synthesis as follows for each prediction pixel in the region 3:

$$\mathrm{Pred\_c} = 0.2 \times \mathrm{Pred\_c\_A} + 0.6 \times \mathrm{Pred\_c\_B} + 0.2 \times \mathrm{Pred\_c\_C}.$$

Fourth, the weight determiner 15 (15a, 15b) sets a rectangular region (sub-block) 4 that is not adjacent to any of the reference pixel groups A to C, and determines, for each prediction pixel in the region 4, the weight coefficients of the respective chroma prediction blocks to be equal or close to equal values. In this case, the weight determiner 15 (15a, 15b) may determine 0.34 as each of the weight coefficients of the chroma prediction blocks A and B and determine 0.32 as the weight coefficient of the chroma prediction block C for each prediction pixel Prec_c in the region 4. The combiner 16 (16a, 16b) performs weighted synthesis as follows for each prediction pixel in the region 4:

$$\mathrm{Pred\_c} = 0.34 \times \mathrm{Pred\_c\_A} + 0.34 \times \mathrm{Pred\_c\_B} + 0.32 \times \mathrm{Pred\_c\_C}.$$

Note that the values of the weight coefficients described above are merely examples and may be changed as appropriate. For example, the values of the weight coefficients may be changed according to a block size.

Further, in a case of performing sub-block partitioning as illustrated in Fig. 14, the generator 14 (14a, 14b) may generate chroma prediction sub-blocks as follows: Region 1: generates a chroma prediction sub-block 1 of a size of the region 1 from a decoded block of the luma component of the region 1 using the linear model C; Region 2: generates a chroma prediction sub-block 2 of a size of the region 2 from a decoded block of the luma component of the region 2 using the linear model A; Region 3: generates a chroma prediction sub-block 3 of a size of the region 3 from a decoded block of the luma component of the region 3 using the linear model B; Region 4: generates three chroma prediction sub-blocks 4 of a size of the region 4 from a decoded block of the luma component of the region 4 using each of the linear models A to C.

In this case, the combiner 16 (16a, 16b) performs weighted synthesis as described above for each prediction pixel in the region 4. Further, the combiner 16 (16a, 16b) may perform filtering processing on each prediction pixel in a boundary region between the regions. Here, the weight determiner 15 (15a, 15b) may determine a filter coefficient (weight coefficient) for each prediction pixel in the boundary region between the regions. For example, the weight determiner 15 (15a, 15b) may determine a larger weight coefficient as it is closer to a boundary between regions.

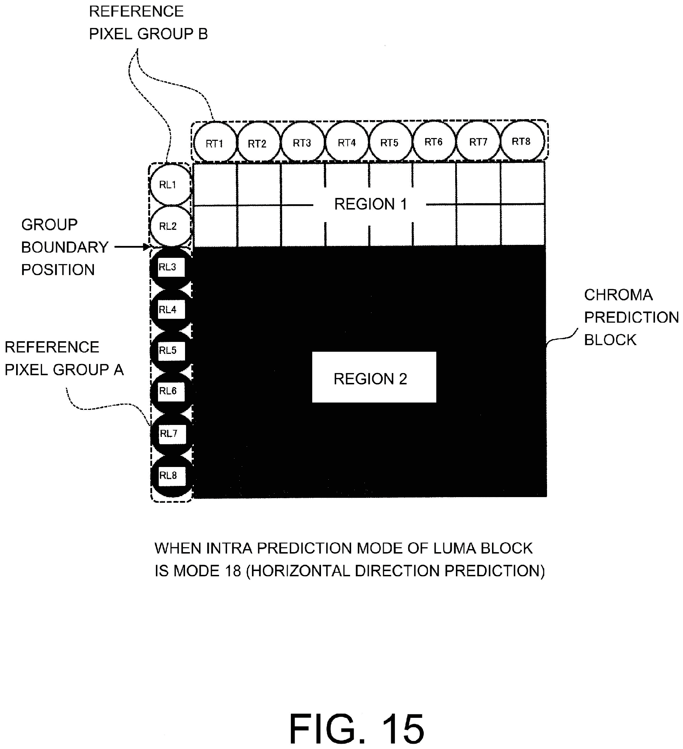

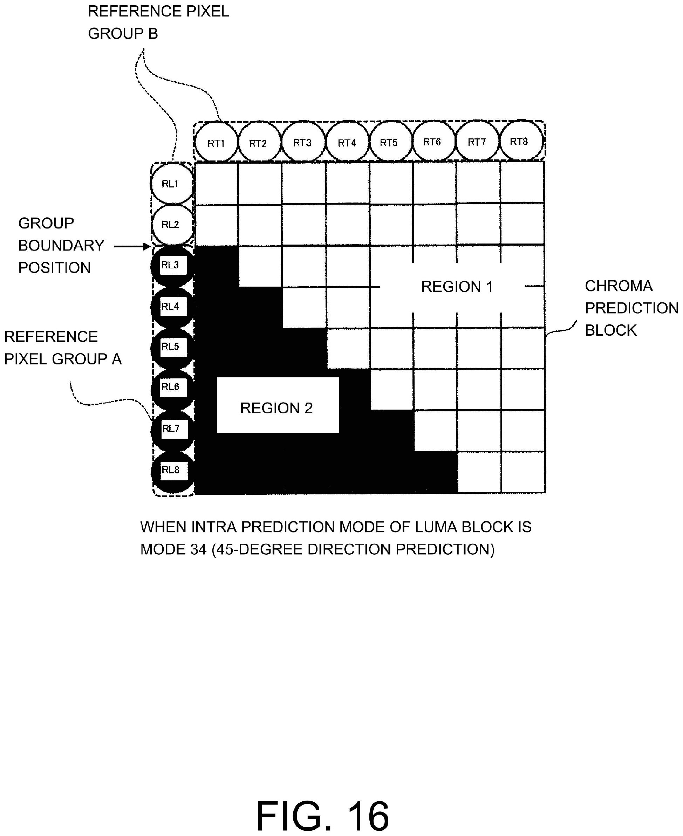

(6) Second Modification Example Next, a second modification example of the above-described embodiment will be described with reference to Figs. 15 and 16. In this modification example, the weight determiner 15 (15a, 15b) determines a weight coefficient for each pixel based further on a prediction direction of an intra prediction mode applied to a decoded block of the luma component.

In the example of Fig. 15, the grouping unit 11 (11a, 11b) configures a reference pixel group A with reference pixels RL3 to RL8, and configures a reference pixel group B with reference pixels RL1 and RL2 and reference pixels RT1 to RT8. Here, it is assumed that an intra prediction mode applied to a decoded block of the luma component corresponding to a prediction-target block of the chroma component is mode 18 (i.e., horizontal direction prediction). In this case, the weight determiner 15 (15a, 15b) sets a boundary line between a region 1 and a region 2 according to the prediction direction of the intra prediction mode.

Then, the weight determiner 15 (15a, 15b) determines, for each prediction pixel in the region 1 adjacent to the reference pixel group B, the weight coefficient of the chroma prediction block B to be larger than the weight coefficient of the chroma prediction block A. In this case, the weight determiner 15 (15a, 15b) may determine 0.7 as the weight coefficient of the chroma prediction block B and determine 0.3 as the weight coefficient of the chroma prediction block A for each prediction pixel Prec_c in the region 1. The combiner 16 (16a, 16b) performs weighted synthesis as follows for each prediction pixel in the region 1:

$$Pred\_c = 0.3 \times Pred\_c\_A + 0.7 \times Pred\_c\_B.$$

On the other hand, the weight determiner 15 (15a, 15b) determines, for each prediction pixel in the region 2 adjacent to the reference pixel group A, the weight coefficient of the chroma prediction block A to be larger than the weight coefficient of the chroma prediction block B. In this case, the weight determiner 15 (15a, 15b) may determine 0.7 as the weight coefficient of the chroma prediction block A and determine 0.3 as the weight coefficient of the chroma prediction block B for each prediction pixel Prec_c in the region 2. The combiner 16 (16a, 16b) performs weighted synthesis as follows for each prediction pixel in the region 2:

$$Pred\_c = 0.7 \times Pred\_c\_A + 0.3 \times Pred\_c\_B.$$

In the example of Fig. 16, the grouping unit 11 (11a, 11b) configures a reference pixel group A with reference pixels RL3 to RL8 and configures a reference pixel group B with reference pixels RL1 and RL2 and reference pixels RT1 to RT8, similarly to Fig. 15. Here, it is assumed that an intra prediction mode applied to a decoded block of the luma component corresponding to a prediction-target block of the chroma component is mode 34 (i.e., 45-degree direction prediction). In this case, the weight determiner 15 (15a, 15b) sets a boundary line between a region 1 and a region 2 in a 45-degree direction according to the prediction direction of the intra prediction mode.

Then, the weight determiner 15 (15a, 15b) determines, for each prediction pixel in the region 1 adjacent to the reference pixel group B, the weight coefficient of the chroma prediction block B to be larger than the weight coefficient of the chroma prediction block A. In this case, the weight determiner 15 (15a, 15b) may determine 0.7 as the weight coefficient of the chroma prediction block B and determine 0.3 as the weight coefficient of the chroma prediction block A for each prediction pixel Prec_c in the region 1. The combiner 16 (16a, 16b) performs weighted synthesis as follows for each prediction pixel in the region 1:

$$Pred\_c = 0.3 \times Pred\_c\_A + 0.7 \times Pred\_c\_B.$$

On the other hand, the weight determiner 15 (15a, 15b) determines, for each prediction pixel in the region 2 adjacent to the reference pixel group A, the weight coefficient of the chroma prediction block A to be larger than the weight coefficient of the chroma prediction block B. In this case, the weight determiner 15 (15a, 15b) may determine 0.7 as the weight coefficient of the chroma prediction block A and determine 0.3 as the weight coefficient of the chroma prediction block B for each prediction pixel Prec_c in the region 2. The combiner 16 (16a, 16b) performs weighted synthesis as follows for each prediction pixel in the region 2:

$$Pred\_c = 0.7 \times Pred\_c\_A + 0.3 \times Pred\_c\_B.$$

Note that, although an example in which the weight coefficient is uniformly determined for each prediction pixel in each region has been described, the weight coefficient may be variably determined according to a distance from a boundary line between regions. For example, in the example of Fig. 15, for prediction pixels in a horizontal prediction pixel line adjacent to the region 2 in the region 1 (i.e., a prediction pixel line on the right side of the reference pixel RL2), the weight determiner 15 (15a, 15b) may determine 0.7 as the weight coefficient of the chroma prediction block B and determine 0.3 as the weight coefficient of the chroma prediction block A. On the other hand, for prediction pixels in a horizontal prediction pixel line not adjacent to the region 2 in the region 1 (i.e., a prediction pixel line on the right side of the reference pixel RL1), the weight determiner 15 (15a, 15b) may determine 0.9 as the weight coefficient of the chroma prediction block B and determine 0.1 as the weight coefficient of the chroma prediction block A. Similarly for the region 2, the weight determiner 15 (15a, 15b) may determine such that the weight of the chroma prediction block B decreases and the weight of the chroma prediction block A increases as the distance from the boundary line between the regions 1 and 2 increases. Such a method for determining the weight coefficient is also applicable to the first modification example described above.

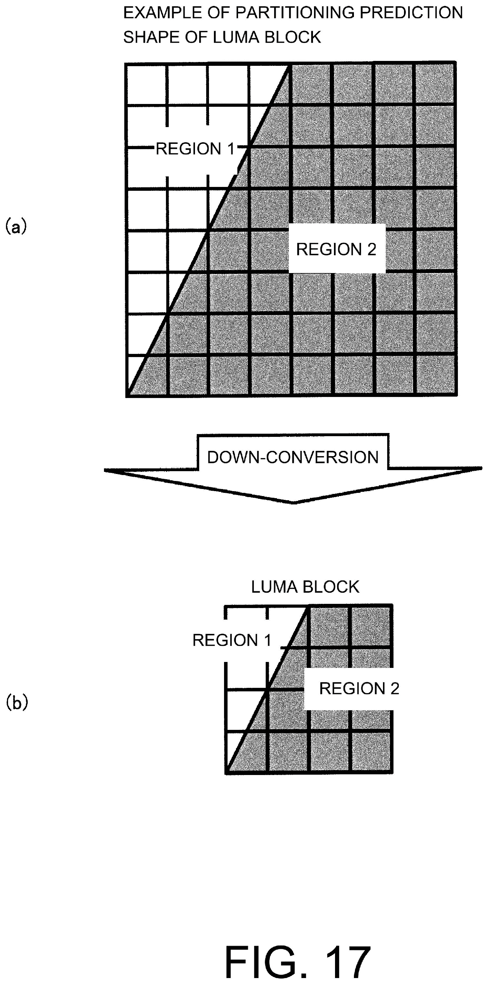

(7) Third Modification Example Next, a third modification example of the above-described embodiment will be described with reference to Figs. 17 to 19. In this modification example, a scenario is assumed in which partitioning prediction is applied to a block of the luma component corresponding to a prediction-target block of the chroma component.

For example, a block of the luma component (luma block) corresponding to a prediction-target block of the chroma component may be divided into a plurality of small regions (also referred to as "sub-blocks" or "sub-partitions") and predicted for each sub-block. Such partitioning prediction may be ISP (Intra Sub-Partition) in which the luma block is divided into sub-partitions and intra prediction is performed for each sub-partition. Alternatively, the partitioning prediction may be BDOF (Bi-Directional Optical-Flow) or DMVR (Decoder-Side Motion Vector Refinement) in which the luma block is divided into sub-blocks and correction processing of inter prediction is performed for each sub-block. BDOF is a technique for correcting an inter prediction image in units of sub-blocks, and DMVR is a technique for correcting a motion vector in units of sub-blocks. Alternatively, the partitioning prediction is not limited to a prediction technique for dividing the luma block into rectangular small regions, and may be a prediction technique for dividing the luma block into non-rectangular small regions. For example, the partitioning prediction may be GPM (Geometric partitioning mode) in which the luma block is divided into non-rectangular small regions and inter prediction is performed for each non-rectangular small region.

Fig. 17 is a diagram for explaining an example of a case where GPM is applied to a luma block corresponding to a prediction-target block of the chroma component. Here, a chroma format such as 4:2:0 is assumed. As illustrated in Fig. 17(a), a luma block of 8x8 size is divided into non-rectangular regions 1 and 2 by GPM, and each of the regions 1 and 2 is predicted by inter prediction. As illustrated in Fig. 17(b), in the inter-component prediction, the luma block is down-converted according to the size of the prediction-target block of the chroma component, and the luma block of 8x8 size is converted into a luma block of 4x4 size.

When such partitioning prediction is applied to the luma block, each small region obtained by partitioning the luma block is considered to have different spatial features from each other. Therefore, by considering a shape (and a boundary) of each small region in the inter-component prediction according to the above-described embodiment, prediction accuracy of intra prediction can be improved.

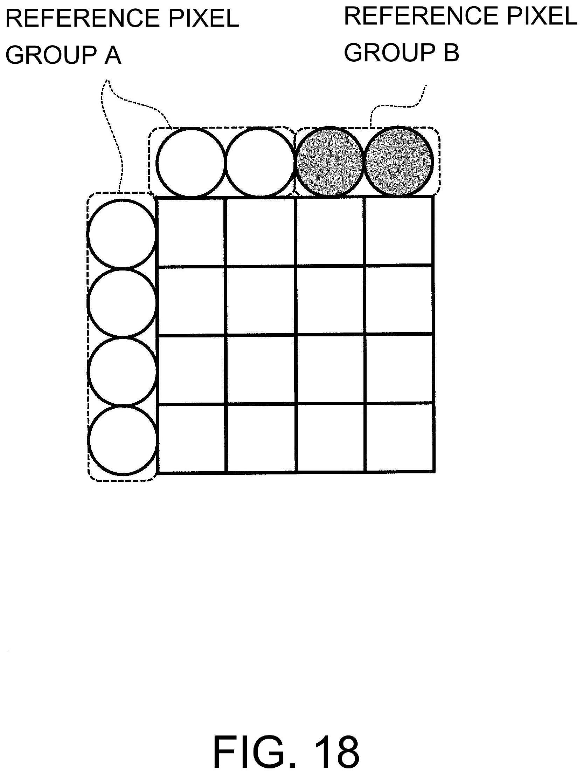

In the scenario of this modification example, the grouping unit 11 (11a, 11b) may determine reference pixel groups based on a partitioning prediction shape applied to the luma block corresponding to the prediction-target block of the chroma component, as illustrated in Fig. 18. That is, the grouping unit 11 (11a, 11b) determines the reference pixel groups in consideration of shapes of small regions (boundaries between the small regions) obtained by partitioning the luma block. In the example of Fig. 18, the grouping unit 11 (11a, 11b) determines reference pixel groups A and B by partitioning reference pixels at positions corresponding to the boundaries of the regions 1 and 2 illustrated in Fig. 17(b). This makes it possible to more appropriately determine the reference pixel groups in a case where the partitioning prediction is applied to the luma block.

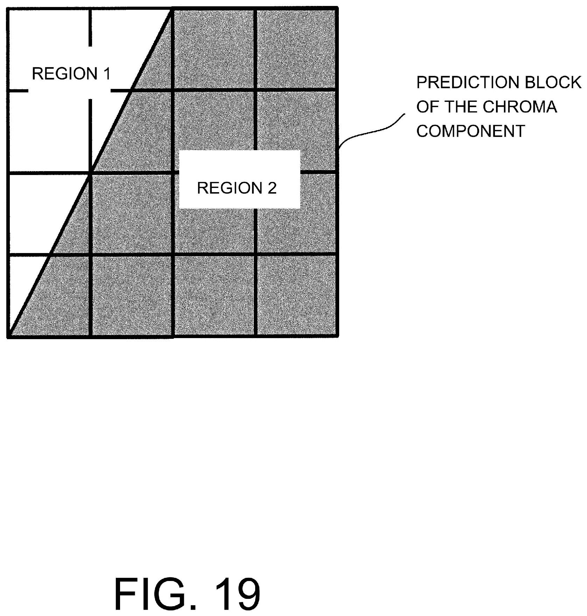

In the scenario of this modification example, the weight determiner 15 (15a, 15b) may determine weight coefficients for each pixel based on the partitioning prediction shape applied to the luma block, as illustrated in Fig. 19. That is, the weight determiner 15 (15a, 15b) determines the weight coefficients for each pixel in consideration of the shapes of the small regions (the boundaries between the small regions) obtained by partitioning the luma block. In the example of Fig. 18, the weight determiner 15 (15a, 15b) changes weighting at positions corresponding to the boundaries of the regions 1 and 2. A specific method for determining the weight coefficient of each region is similar to those of the above-described embodiment and modification examples thereof. This makes it possible to realize more appropriate weighted synthesis in a case where the partitioning prediction is applied to the luma block.

(8) Other Embodiments In the above-described embodiment, an example in which the model derivation unit 12 derives a linear model as a prediction model has been described. In this case, the model derivation unit 12 derives the linear model as the prediction model on an assumption that a correlation between reference pixels of the luma component and reference pixels of the chroma component is linear. However, the model derivation unit 12 may derive a non-linear model as the prediction model on an assumption that the correlation between the reference pixels of the luma component and the reference pixels of the chroma component is non-linear. For example, the model derivation unit 12 may derive a non-linear model using a quadratic curve as the prediction model.

A program for causing a computer to execute each process performed by the image processing apparatus (the intra prediction apparatus, the encoding device 1, or the decoding device 2) may be provided. The program may be recorded on a computer-readable medium. The program can be installed in a computer by using the computer-readable medium. Here, the computer-readable medium on which the program is recorded may be a non-transitory recording medium. The non-transitory recording medium is not particularly limited, but may be, for example, a recording medium such as a CD-ROM or a DVD-ROM. Circuits for executing the respective processes performed by the image processing apparatus (the intra prediction apparatus, the encoding device 1, or the decoding device 2) may be integrated, and the image processing apparatus may be configured as a semiconductor integrated circuit (a chipset or an SoC: System on a chip).

The functions realized by the image processing apparatus (the intra prediction apparatus, the encoding device 1, or the decoding device 2) may be implemented in circuitry or processing circuitry including a general-purpose processor, a special-purpose processor, an integrated circuit, ASICs (Application Specific Integrated Circuits), a CPU (a Central Processing Unit), a conventional circuit, and/or a combination thereof, which is programmed to realize the described functions. The processor includes transistors and other circuits, and is considered as the circuitry or the processing circuitry. The processor may be a programmed processor that executes a program stored in a memory. In the present specification, the circuitry, the unit, and the means are hardware programmed to realize the described functions or hardware that executes the described functions. The hardware may be any hardware disclosed in the present specification, or any hardware known as being programmed to realize or execute the described functions. When the hardware is a processor considered to be a type of circuitry, the circuitry, the means, or the unit is a combination of the hardware and software used to configure the hardware and/or the processor.

The descriptions of "based on" and "depending on/in response to" used in the present disclosure do not mean "based only on" and "depending only on," respectively, unless otherwise specified. The description of "based on" means both "based only on" and "at least partially based on." Similarly, the description of "depending on" means both "depending only on" and "at least partially depending on." The terms "include," "comprise," and variations thereof do not mean including only listed items, and may include only the listed items or may include further items in addition to the listed items. Further, the term "or" used in the present disclosure is intended not to be an exclusive OR. Furthermore, any reference to an element using designations such as "first" and "second" used in the present disclosure does not generally limit the amount or order of those elements. These designations may be used herein as a convenient way to distinguish between two or more elements. Therefore, a reference to the first and second elements does not mean that only two elements can be employed therein, or that the first element must precede the second element in some way. In the present disclosure, for example, when articles such as "a," "an," and "the" in English are added by translation, these articles shall include a plurality of items unless the context clearly indicates otherwise.

Although the embodiments have been described in detail with reference to the drawings, a specific configuration is not limited to the above, and various design changes and the like can be made without departing from the gist.

The present application claims priority to Japanese Patent Application No. 2023-170492 (filed on September 29, 2023), the entire contents of which are incorporated herein by reference.

(9) Supplementary Notes Features regarding the above-described embodiments are appended as supplementary notes.

(Supplementary Note 1) An intra prediction device (172, 242) for performing intra prediction in units of blocks obtained by dividing an image including each of a luma component and a chroma component, comprising: a grouping unit (11a, 11b) configured to determine a plurality of reference pixel groups by spatially grouping each of decoded reference pixels of the luma component and the chroma component according to positions thereof; and a model derivation unit (12a, 12b) configured to derive a plurality of prediction models by calculating, for each of the plurality of reference pixel groups, a prediction model for predicting a prediction-target block of the chroma component from a decoded block of the luma component.

(Supplementary Note 2) The intra prediction device according to supplementary note 1, wherein the grouping unit determines the reference pixel groups based further on a partitioning prediction shape applied to the decoded block of the luma component.

(Supplementary Note 3) The intra prediction device according to supplementary note 1 or 2, further comprising a predictor (13a, 13b) configured to predict the prediction-target block of the chroma component from the decoded block of the luma component using the plurality of prediction models, wherein the predictor includes: a generator (14a, 14b) configured to generate a plurality of chroma prediction blocks from the decoded block of the luma component using the plurality of prediction models; and a combiner (16a, 16b) configured to synthesize the plurality of chroma prediction blocks by weighted synthesis and output a prediction block corresponding to the prediction-target block of the chroma component.

(Supplementary Note 4) The intra prediction device according to supplementary note 3, wherein the predictor further includes a weight determiner (15a, 15b) configured to determine a weight coefficient to be used for the weighted synthesis for each pixel, and wherein the weight determiner determines the weight coefficient for each pixel based on a position of the pixel.

(Supplementary Note 5) The intra prediction device according to supplementary note 4, wherein the weight determiner determines the weight coefficient for each pixel based further on a partitioning prediction shape applied to the decoded block of the luma component.

(Supplementary Note 6) The intra prediction device according to supplementary note 4 or 5, wherein the weight determiner determines the weight coefficient for each pixel based further on a prediction direction of an intra prediction mode applied to the decoded block of the luma component.

(Supplementary Note 7) The intra prediction device according to any one of supplementary notes 1 to 6, wherein each of the plurality of reference pixel groups is composed of a plurality of spatially adjacent reference pixels.

(Supplementary Note 8) The intra prediction device according to supplementary note 7, wherein the grouping unit changes a boundary position between the reference pixel groups by performing the grouping based on correlation of pixel values between the reference pixels.

(Supplementary Note 9) A program for causing a computer to function as the intra prediction device according to any one of supplementary notes 1 to 8.

[Reference Signs List]

1: encoding device
2: decoding device
10a: inter-component predictor
10b: inter-component predictor
11a: grouping unit
11b: grouping unit
12a: model derivation unit
12b: model derivation unit
13a: predictor
13b: predictor
14a: generator
14b: generator
15a: weight determiner
15b: weight determiner
16a: combiner
16b: combiner
100: block divider
110: subtractor
120: transformer/quantizer
121: transformer
122: quantizer
130: entropy encoder
140: inverse quantizer/inverse transformer
141: inverse quantizer
142: inverse transformer
150: combiner
160: memory
170: predictor
171: inter predictor
172: intra predictor
173: switch
200: entropy decoder
210: inverse quantizer/inverse transformer
211: inverse quantizer
212: inverse transformer
220: combiner
230: memory
240: predictor

241: inter predictor
242: intra predictor
243: switch

**Claims**

1. An intra prediction device for performing intra prediction in units of blocks obtained by dividing an image including each of a luma component and a chroma component, comprising:

   a grouping unit configured to determine a plurality of reference pixel groups by spatially grouping each of decoded reference pixels of the luma component and the chroma component according to positions thereof; and
   a model derivation unit configured to derive a plurality of prediction models by calculating, for each of the plurality of reference pixel groups, a prediction model for predicting a prediction-target block of the chroma component from a decoded block of the luma component.

2. The intra prediction device according to claim 1, wherein the grouping unit determines the reference pixel groups based further on a partitioning prediction shape applied to the decoded block of the luma component.

3. The intra prediction device according to claim 1 or 2, further comprising

   a predictor configured to predict the prediction-target block of the chroma component from the decoded block of the luma component using the plurality of prediction models, wherein
   the predictor includes:

   a generator configured to generate a plurality of chroma prediction blocks from the decoded block of the luma component using the plurality of prediction models; and
   a combiner configured to synthesize the plurality of chroma prediction blocks by weighted synthesis and output a prediction block corresponding to the prediction-target block of the chroma component.

4. The intra prediction device according to claim 3, wherein the predictor further includes a weight determiner configured to determine a weight coefficient to be used for the weighted synthesis for each pixel, and wherein the weight determiner determines the weight coefficient for each pixel based on a position of the pixel.

5. The intra prediction device according to claim 4, wherein the weight determiner determines the weight coefficient for each pixel based further on a partitioning prediction shape applied to the decoded block of the luma component.

6. The intra prediction device according to claim 4, wherein the weight determiner determines the weight coefficient for each pixel based further on a prediction direction of an intra prediction mode applied to the decoded block of the luma component.

7. The intra prediction device according to claim 1, wherein each of the plurality of reference pixel groups is composed of a plurality of spatially adjacent reference pixels.

8. The intra prediction device according to claim 7, wherein the grouping unit changes a boundary position between the reference pixel groups by performing the grouping based on correlation of pixel values between the reference pixels.

9. A program for causing a computer to function as the intra prediction device according to claim 1.

1 ENCODING DEVICE

120

100

110

121

122

130

INPUT → BLOCK DIVIDER → ⊖ → TRANSFORMER → QUANTIZER → ENTROPY ENCODER → OUTF

140

141

INVERSE QUANTIZER

142

INVERSE TRANSFORMER

150

COMBINER

160

MEMORY

170

PREDICTOR

171

INTER PREDICTOR

173

172

INTRA PREDICTOR (INTRA PREDICTION DEVICE)

10a

INTER-COMPONENT PREDICTOR

# FIG. 1

FIG. 2

FIG. 3

```
┌─────────────────┐                          ┌─────────────────┐
│ REFERENCE       │                          │ REFERENCE       │
│ PIXELS OF LUMA  │                          │ PIXELS OF       │
│ COMPONENT       │                          │ CHROMA          │
│                 │                          │ COMPONENT       │
└─────────────────┘                          └─────────────────┘

┌─────────────────┐                          ┌─────────────────┐
│ REFERENCE       │                          │ REFERENCE       │
│ PIXEL GROUP A   │                          │ PIXEL GROUP B   │
└─────────────────┘                          └─────────────────┘

┌─────────────────┐                          ┌─────────────────┐
│ LINEAR MODEL A  │                          │ LINEAR MODEL B  │
└─────────────────┘                          └─────────────────┘

               ┌─────────────────┐
               │ DECODED         │
               │ BLOCK OF LUMA   │
               │ COMPONENT       │
               └─────────────────┘

  APPLICATION OF                               APPLICATION OF
  LINEAR MODEL A                               LINEAR MODEL B

┌─────────────────┐                          ┌─────────────────┐
│ CHROMA          │                          │ CHROMA          │
│ PREDICTION      │                          │ PREDICTION      │
│ BLOCK A         │                          │ BLOCK B         │
└─────────────────┘                          └─────────────────┘

               WEIGHTED COMBINATION

               ┌─────────────────┐
               │ CHROMA          │
               │ PREDICTION      │
               │ BLOCK           │
               └─────────────────┘
```

# FIG. 4

UPPER-SIDE REFERENCE PIXEL GROUP
(REFERENCE PIXEL GROUP B)

PREDICTION-
TARGET BLOCK
OF CHROMA
COMPONENT

LEFT-SIDE
REFERENCE
PIXEL GROUP
(REFERENCE
PIXEL GROUP A)

FIG. 5

REFERENCE
PIXEL GROUP B

CHROMA
REFERENCE
PIXELS

PREDICTION-TARGET
CHROMA BLOCK
(TARGET CHROMA
BLOCK)

(a)

REFERENCE
PIXEL GROUP A

CHROMA

$N$

$N$

REFERENCE
PIXEL GROUP B

LUMA REFERENCE
PIXELS

CORRESPONDING
DECODED BLOCK
OF LUMA
COMPONENT

REFERENCE
PIXEL GROUP A

LUMA

(b)

$2N$

$2N$

# FIG. 6

FIG. 7

REFERENCE
PIXEL GROUP A

CHROMA
PREDICTION
BLOCK A

FIG. 8

210

200                                    211           212

2 DECODING DEVICE

INPUT → ENTROPY DECODER → INVERSE QUANTIZER → INVERSE TRANSFORMER

220                    230

COMBINER → MEMORY → OUTI

PREDICTOR

241        240

INTER PREDICTOR

243

242

INTRA PREDICTOR
(INTRA PREDICTION DEVICE)

INTER-COMPONENT PREDICTOR        10b

FIG. 9

FIG. 10

START

S1

DETERMINE A PLURALITY OF REFERENCE PIXEL GROUP BY
SPATIALLY GROUPING DECODED REFERENCE PIXELS OF
EACH OF A LUMA COMPONENT AND A CHROMA
COMPONENT ACCORDING TO POSITIONS THEREOF

S2

REFERENCE PIXEL GROUPS, A PREDICTION MODEL FOR
PREDICTING A PREDICTION-TARGET BLOCK OF THE
CHROMA COMPONENT FROM A DECODED BLOCK OF THE
LUMA COMPONENT

S3

GENERATE A PLURALITY OF CHROMA PREDICTION BLOCKS
FROM THE DECODED BLOCK OF THE LUMA COMPONENT
USING THE PLURALITY OF PREDICTION MODELS

S4

COMBINE THE PLURALITY OF CHROMA PREDICTION BLOCKS
BY WEIGHTED COMBINATION, AND OUTPUT A PREDICTION
BLOCK CORRESPONDING TO THE PREDICTION-TARGET
BLOCK OF THE CHROMA COMPONENT
(A WEIGHTING FACTOR FOR EACH PIXEL IS DETERMINED
BASED ON A POSITION OF THE PIXEL)

END

# FIG. 11

REFERENCE
PIXEL GROUP C

GROUP BOUNDARY
POSITION

REFERENCE
PIXEL GROUP B

RT1  RT2  RT3  RT4  RT5  RT6  RT7  RT8

RL1

RL2

RL3

GROUP
BOUNDARY
POSITION

RL4

RL5

REFERENCE
PIXEL GROUP A

RL6

RL7

RL8

PREDICTION-
TARGET BLOCK
OF CHROMA
COMPONENT

# FIG. 12

FIG. 13

FIG. 14

REFERENCE
PIXEL GROUP B

| RT1 | RT2 | RT3 | RT4 | RT5 | RT6 | RT7 | RT8 |

RL1

RL2

GROUP
BOUNDARY
POSITION

RL3

RL4

RL5

RL6

RL7

RL8

REGION 1

CHROMA
PREDICTION
BLOCK

REGION 2

REFERENCE
PIXEL GROUP A

WHEN INTRA PREDICTION MODE OF LUMA BLOCK
IS MODE 18 (HORIZONTAL DIRECTION PREDICTION)

# FIG. 15

FIG. 16

EXAMPLE OF PARTITIONING PREDICTION
SHAPE OF LUMA BLOCK

(a)

REGION 1

REGION 2

DOWN-CONVERSION

(b)

LUMA BLOCK

REGION 1

REGION 2

# FIG. 17

REFERENCE PIXEL GROUP A

REFERENCE PIXEL GROUP B

FIG. 18

REGION 1

REGION 2

PREDICTION BLOCK
OF THE CHROMA
COMPONENT

FIG. 19

## INTERNATIONAL SEARCH REPORT

International application No.

**PCT/JP2024/034471**

### A. CLASSIFICATION OF SUBJECT MATTER

*H04N 19/11*(2014.01)i; *H04N 19/14*(2014.01)i; *H04N 19/157*(2014.01)i; *H04N 19/176*(2014.01)i; *H04N 19/186*(2014.01)i
FI:   H04N19/11; H04N19/14; H04N19/157; H04N19/176; H04N19/186

According to International Patent Classification (IPC) or to both national classification and IPC

### B. FIELDS SEARCHED

Minimum documentation searched (classification system followed by classification symbols)

H04N19/11; H04N19/14; H04N19/157; H04N19/176; H04N19/186

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2023/057501 A1 (INTERDIGITAL VC HOLDINGS) 13 April 2023 (2023-04-13) paragraphs [0128], [0166]-[0167], fig. 11 | 1-7, 9 |
| A | | 8 |

☐ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 November 2024** | **10 December 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

| Patent document cited in search report | Publication date (day/month/year) | Patent family member(s) | Publication date (day/month/year) |
|---|---|---|---|
| WO 2023/057501 A1 | 13 April 2023 | CN 118216142 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023170492 A